# EUROPÄISCHE PATENTSCHRIFT

(11) **EP 4 473 267 B1**
(45) Veröffentlichungstag und Bekanntmachung des Hinweises auf die Patenterteilung: **29.07.2026**
(21) Anmeldenummer: 23703043.2
(22) Anmeldetag: 01.02.2023
(51) Int. Cl.: G01B 11/25

(54) **VERFAHREN UND MESSSYSTEM ZUM DREIDIMENSIONALEN VERMESSEN VON OBJEKTEN**
DEVICE AND MEASURING SYSTEM FOR THREE-DIMENSIONAL MEASURING OF OBJECTS
DISPOSITIF ET SYSTÈME DE MESURE POUR LA MESURE TRIDIMENSIONNELLE D'OBJETS

(30) Priorität: 03.02.2022 DE 102022102547
(43) Veröffentlichungstag der Anmeldung: 11.12.2024
(73) Patentinhaber: Carl Zeiss GOM Metrology GmbH, 38122 Braunschweig (DE)
(72) Erfinder: BOTHE, Thorsten, 38124 Braunschweig (DE); GOMERCIC, Mladen, 38102 Braunschweig (DE); EBERL, Christian, 38126 Braunschweig (DE); JÖRCK, Michael, 38114 Braunschweig (DE)
(74) Vertreter: Günther, Constantin
(86) Internationale Anmeldenummer: PCT/EP2023/052450
(87) Internationale Veröffentlichungsnummer: WO 2023/148225

(56) Entgegenhaltungen:
- EP-A1- 3 581 881
- DE-A1- 102018 103 942

## Beschreibung

Die Erfindung betrifft ein Verfahren zum dreidimensionalen Vermessen von Objekten mit einem triangulierenden Messverfahren durch Projektion von Lichtstrukturen auf das zu vermessende Objekt, Aufnehmen der projizierten Lichtstrukturen mittels optoelektronischer Bildaufnahme und rechnergestützter Auswertung der aufgenommenen Bilder zur Vermessung des Objektes, wobei die Lichtstrukturen in einem ersten Wellenlängenbereich aufprojiziert werden und die Bildaufnahme den Wellenlängenbereich erfasst, der die durch Fluoreszenz bewirkten Intensitäten des Objektes umfasst.

Die Erfindung betrifft weiterhin ein Messsystem zum dreidimensionalen Vermessen von Objekten mit einem solchen triangulierenden Messverfahren, wobei das Messsystem eine Projektionseinheit zur Projektion von Lichtstrukturen auf das zu vermessende Objekt, eine optoelektronische Bildaufnahmeeinheit zum Aufnehmen der projizierten Lichtstrukturen und eine Auswerteeinheit zur rechnergestützten Auswertung der aufgenommenen Bilder zur Vermessung des Objektes hat, wobei das Messsystem eingerichtet ist, um die Lichtstrukturen in einem ersten Wellenlängenbereich aufzuprojizieren und den Wellenlängenbereich bei der Bildaufnahme zu erfassen, der die durch Fluoreszenz bewirkten Intensitäten des Objektes umfasst.

Die dreidimensionale optische Erfassung von Objektoberfläche mittels optischer Triangulationssensoren, ist hinreichend bekannt.

Hierbei werden beispielsweise Linien oder Streifenmuster auf das zu vermessende Objekt projiziert und unter einem Winkel von einer oder mehreren Kameras beobachtet und anschießend rechnergestützt ausgewertet. Die Auswerteverfahren sind z. B. kodierter Lichtansatz, Phasen-Shift-Verfahren, Heterodyn-Verfahren oder Lichtschnittverfahren.

Die Grundlage und praktischen Anwendungen solcher Messverfahren werden beispielsweise in B. Breuckmann: "Bildverarbeitung und optische Messtechnik in der industriellen Praxis", Franzis Verlag, 1993 ausführlich beschrieben.

DE 37 21 247 A1 beschreibt eine Anordnung zur Bestimmung der Oberflächengestalt von Objekten, insbesondere zur Untersuchung der Verformung der Augenhornhaut. Die Anordnung besteht aus einem auf die Oberfläche projizierten Projektionsgitter sowie aus einem in einem Strahlengang einer Beobachtungs- und/oder Auswerteeinheit angeordneten Referenzgitter. Auf der Oberfläche ist eine fluoreszierende Schicht vorgesehen und im Projektionsstrahlengang ein Bandpassfilter mit einem Durchlassbereich, der im Wesentlichen der Anregungswellenlänge der fluoreszierenden Schicht entspricht. Im Strahlengang des Referenzgitters ist ein Bandpassfilter mit einem Durchlassbereich angeordnet, der im Wesentlichen der Wellenlänge der Fluoreszenzstrahlung entspricht. Durch die Trennung von Anregungs- und Fluoreszenzlicht mittels der eingesetzten Filter soll eine kontrastreiche Darstellung der Höhenlinien im Moire-Verfahren gewährleistet werden.

DE 10 2013 001 600 A1 beschreibt ein Verfahren und eine Vorrichtung zum Überprüfen der Oberfläche einer Prüffläche durch Bestrahlen der Prüffläche mit elektromagnetischen Wellen, Abtasten zumindest eines Teilbereichs der Prüffläche und Ermitteln der Oberflächeneigenschaften der Prüffläche anhand der Lumineszenz-Effekte der bestrahlten Prüffläche. Oberflächeneigenschaften können anhand von Veränderungen der Fluoreszenzeigenschaften einer zumindest teilweise beschichteten Prüffläche ermittelt werden.

DE 10 2012 100 955 A1 beschreibt eine Vorrichtung zum Erfassen der dreidimensionalen Geometrie von Objekten, insbesondere von Zähnen, mit einer optischen Einrichtung mit einem Projektor zur Projektion eines Musters, einer Lichtquelle und einer Kamera, wobei die Lichtquelle des Projektors nicht in einem Projektions-Wellenlängenbereich aussendet und die optische Einrichtung Licht in wenigstens zwei Aufnahme-Wellenlängenbereichen erfasst. Dabei wird die Eigenfluoreszenz von Zähnen ausgenutzt.

US 2002/0055082 A1 beschreibt ein Verfahren und ein System zur dreidimensionalen Vermessung von Objekten, deren Oberfläche mit einer lumineszierenden Substanz beschichtet wird, um die Bildqualität zu erhöhen. Ein strukturiertes Lichtmuster wird bei der ersten Wellenlänge auf das Objekt projiziert und es wird eine Abbildung des Objektes mit der aufprojizierten Lichtstruktur in der zweiten fluoreszierenden Wellenlänge aufgenommen.

DE 10 2018 103 942 A1 offenbart ein Verfahren und eine Vorrichtung zur Vermessung der Oberflächenform eines Brillenglases durch Emission eines räumlichen Strahlenmusters mit einem Laserstrahl und Bildaufnahme des Messbereichs. Die Bildaufnahme des Brillenglases wird mittels einer Bildaufnahmeeinheit erstellt, während die Lasereinheit das Brillenglas mit dem Strahlmuster beleuchtet, wobei die Bildaufnahme das Licht der durch das Strahlenmuster im Brillenglas hervorgerufene Fluoreszenz umfasst. Die Oberflächenform wird durch optische Fluoreszenztriangulation aus dem Fluorezenzlicht ermittelt.

EP 3 581 881 A1 offenbart eine Oberflächenvermessung mittels angeregter Fluoreszenz. Die Messstrahlung ist mit einem derartigen Wellenlängenspektrum erzeugbar, dass durch eine Wechselwirkung der Messstrahlung mit dem Objektmaterial eine Fluoreszenz anregbar und Fluoreszenzlicht emittierbar ist, wobei ein Spektrum des Fluoreszenzlichts und das Wellenlängenspektrum der Messstrahlung unterschiedlich sind. Der Detektor ist zur Erfassung des Fluoreszenzlichts ausgebildet. Basierend auf der Erfassung des Fluoreszenzlichts sind Fluoreszenzmessdaten als zweite Entfernungsmessdaten erzeugbar.

Aufgabe der vorliegenden Erfindung ist es, ein verbessertes Verfahren zum dreidimensionalen Vermessen von Objekten sowie ein Messsystem zur Ausführung eines solchen Verfahrens zu schaffen.

Die Aufgabe wird mit dem Verfahren mit den Merkmalen des Anspruchs 1 sowie durch das Messsystem mit den Merkmalen des Anspruchs 15 gelöst. Vorteilhafte Ausführungsformen sind in den Unteransprüchen beschrieben.

Die dreidimensionale Vermessung unter Ausnutzung der durch Fluoreszenz bewirkten Intensitäten des zu vermessenden Objektes erfolgt durch Filterung der vom Objekt ausgehenden Wellenlängen beim Aufnehmen der projizierten Lichtstrukturen, wobei für dieselbe Bildaufnahme sowohl der zur Projektion von Lichtstrukturen genutzte Wellenlängenbereich, als auch der die Fluoreszenz umfassende Wellenlängenbereich erfasst wird. Es wird vorgeschlagen, dass eine Abstimmung der bei der Filterung durch Dämpfung des Projektions-Wellenlängenbereichs durchgelassenen Lichtmenge des Projektions-Wellenlängenbereichs auf die Lichtmenge der Fluoreszenz-Wellenlänge zum Ausgleich der Bildhelligkeiten der durch beide Wellenlängenbereiche hervorgerufenen Effekte erfolgt, wobei die Transmission des die Fluoreszenz umfassenden Wellenlängenbereichs größer als die Transmission des zur Projektion von Lichtstrukturen genutzten Wellenlängenbereichs ist. Eine Bildaufnahme vereint damit die durch die fluoreszierende Wellenlänge bewirkte Abbildung mit der durch die projizierte Wellenlänge bewirkte Abbildung des Objektes mit den darauf projizierten Lichtstrukturen. Damit kann eine konturenscharfe Abbildung erreicht werden, bei der Störungen durch bei Projektion auftretende helle Lichtpunkte mit Hilfe der Mischung der in der Bildaufnahme vorhandenen Wellenlängenbereiche reduziert werden.

Dies kann dadurch erreicht werden, dass das gattungsgemäße Messsystem ein Filter zur Filterung der vom Objekt ausgehenden Wellenlängen beim Aufnehmen der projizierten Lichtstrukturen aufweist. Der Filter ist derart ausgebildet, dass für dieselbe Bildaufnahme sowohl der zur Projektion von Lichtstrukturen genutzte Wellenlängenbereich, als auch der die Fluoreszenz umfassende Wellenlängenbereich erfasst wird und die Transmission des die Fluoreszenz umfassenden Wellenlängenbereichs größer als die Transmission des zur Projektion von Lichtstrukturen genutzten Wellenlängenbereichs ist.

Die dreidimensionale Vermessung unter Ausnutzung der durch Fluoreszenz bewirkten Intensitäten des zu vermessenden Objektes kann für elektronische oder elektromechanische Bauteile oder Bauteile aus Kunststoffmaterial als Objekte erfolgen, die eine selbstfluoreszierende Oberfläche haben. Dies ermöglicht eine zuverlässige und qualitativ hochwertige optische Vermessung ohne eine zusätzliche Modifikation des Objektes durch nicht, nur schwer bzw. mit Aufwand entfernbare Beschichtungen. Damit werden inhärente fluoreszierende Eigenschaften der zu vermessenden Objekte unabhängig davon ausgenutzt, ob nur der die Fluoreszenz umfassende Wellenlängenbereich oder auch der gedämpfte Projektions-Wellenlängenbereich bei der Aufnahme eines Bildes erfasst wird. Dabei ist die Verwendung des Messsystems und Verfahrens zur dreidimensionalen Vermessung von elektronischen oder elektromechanischen Bauteilen als Objekte, die mit Isolierlack beschichtete, elektrisch leitfähige Teile haben, besonders vorteilhaft. Die Bauteile können dann ohne Notwendigkeit einer zusätzlichen Beschichtung für die Vermessung genutzt werden, da diese bereits mit selbstfluoreszierender Oberfläche ausgestattet sind. Die von den mit selbstfluoreszierender Oberfläche versehenen Teilen, die bspw. mit Isolierlack beschichtet sind, aufgenommenen Bilder werden durch Filterung mittels höherer Transmission des die Fluoreszenz umfassenden Längenwellenbereichs und geringerer Transmission des zur Projektion von Lichtstrukturen genutzten Wellenlängenbereichs erfasst. Dies kann beispielsweise durch einen dem Bildsensor vorgelagerten Filter oder einer der Rohdatenerfassung der aufgenommenen Bilder mit dem Bildsensor nachgelagerten Filterung durch rechnergestützte Bildbearbeiten erfolgen.

Die Beschichtung der elektrisch leitfähigen Teile mit Isolierlack führt dazu, dass diese elektronischen oder elektromechanischen Bauteile bei der Projektion von Lichtstrukturen auf diese Bauteile eine Lichtabstrahlung durch Fluoreszenz bewirken. Dies wird ausgenutzt, um Bilder in dem die Fluoreszenz umfassenden Wellenlängenbereich aufzunehmen und dabei den zur Projektion der Lichtstrukturen genutzten Wellenlängenbereich auszufiltern. Damit gelingt es, Reflexionen im zur Projektion der Lichtstrukturen genutzten Welllängenbereich zu eliminieren, welche die Bildauswertung durch helle Lichtflecken erschweren. Die durch die Fluoreszenz bewirkten Intensitäten hingegen bilden die mit Isolierlack beschichteten elektronischen oder elektromechanischen Bauteile derart konturenscharf ab, dass damit eine dreidimensionale Vermessung möglich wird, ohne dass hierzu eine Bearbeitung der Bauteile durch temporäre Beschichtung notwendig ist.

Entsprechendes gilt für Kunststoffteile, die bei Beleuchtung im Projektionswellenlängenbereich eine fluoreszierende Eigenschaft haben und ausgehendes Licht in einem Fluoreszenz-Wellenlängenbereich mit hinreichender Lichtstärke bewirken. Dies können z. B. Gehäuseteile für elektronische oder elektromechanische Bauteile sein, oder bspw. Kunststoffabdeckungen von Leuchten, farbige Kunststoffe oder Gläser.

Das Verfahren kann vorteilhaft zur Vermessung von Elektromaschinen eingesetzt werden, insbesondere von Rotor- und/oder Statorwicklungen von Elektromaschinen.

Der zur Projektion der Lichtstrukturen genutzte Wellenlängenbereich wird mit einem Filter gedämpft und die Fluoreszenz-Wellenlängen durchgelassen. Solche Filter sind einfach und zuverlässig in die Optik der mindestens einen Kamera integrierbar, die zur optoelektrischen Bildaufnahme der elektronischen oder elektromechanischen Bauteile eingesetzt wird, während eine Lichtstruktur auf dieses Bauteil aufprojiziert wird. Der über den Wellenlängenbereich der Fluoreszenz hinausgehende Wellenbereich wird bei der Nutzung eines Langpass-Kantenfilters nicht geblockt. Dieses ist aber unerheblich, da der optoelektronische Sensor in der Regel in den darüber hinaus gehenden Wellenlängenbereich nicht mehr sensitiv ist bzw. sich dort nicht die störenden Reflexionen im Wellenlängenbereich der Projektion finden.

Denkbar ist die genannte Langpassfilterung bspw. mit einem Langpass-Kantenfilter oder eine Bandpassfilterung, die an die Wellenlängenbereiche der durch Fluoreszenz bewirkten Intensitäten des Objektes angepasst ist.

Der zur Projektion genutzte Wellenlängenbereich wird nicht vollständig geblockt. Vorteilhaft ist, wenn dieser Wellenlängenbereich noch mit einem Anteil von 0,1 bis 10 % durchgelassen wird. Damit wird die durch die Projektion der Lichtstrukturen bewirkte Bildinformation noch trotz geringerer Lichtstärke beibehalten.

Vorteilhafter Weise kann der durchgelassene Anteil so gewählt werden, dass der zur Projektion genutzte Wellenlängenbereich und der Fluoreszenz-Wellenlängenbereich eine ähnliche Helligkeit aufweisen.

Die hellen Flecken, z. B. Hotspots, welche durch Reflexion im zur Projektion genutzten Wellenlängenbereich auftreten, werden so stark gedämpft, dass sie das resultierende Bild nicht nachteilig für die Bildauswertung zur dreidimensionalen Vermessung stören, wie beispielsweise durch starke Helligkeitsgradienten oder durch einen für das Messsystem zu hohen Dynamikumfang.

Die Fluoreszenz-Wellenlänge kann beispielsweise ab 500 nm durchgelassen werden. Dieser ganze Frequenzbereich ist für typischen Isolierlack von elektronischen oder elektromechanischen Bauteilen geeignet, um die durch einen solchen Isolierlack verursachte Fluoreszenz zu erfassen.

Die Projektion kann in einem sichtbaren Wellenlängenbereich von oberhalb 400 nm erfolgen. Vorteilhaft ist eine Projektion im blauen Licht im Wellenlängenbereich von 420 bis 490 nm, da dieser Wellenlängenbereich inhärent augensicher ist.

Denkbar ist aber auch eine Projektion mit grünem Licht im Wellenlängenbereich von 490 bis 575 nm oder eine Kombination von mindestens zwei Farbspektren, wie blaues und grünes Licht, blaues und rotes Licht, grünes und rotes Licht oder blaues, grünes und rotes Licht.

Die Projektion der Lichtstrukturen kann aber auch im ultravioletten Wellenlängenbereich von 100 bis 400 nm erfolgen, dies ist wiederum abhängig von der Messung der Umgebung der spezifischen Art des zu vermessenen Objektes. Auch hier kann der ultraviolette Wellenlängenbereich mit mindestens einer Farbe mit einer Wellenlänge oberhalb von 400 nm kombiniert werden.

Bei der Bildaufnahme kann Filterung mit einem dielektrischen Filter, einem absorbierenden Filter oder einer Kombination aus dielektrischem und absorbierendem Filter erfolgen. Damit lassen sich die Durchlasseigenschaften optimieren. Zur Erfassung eines möglichst großen Messlichtanteils ist eine Entspiegelung der Filter vorteilhaft.

Vorteilhafterweise kann der Filter austauschbar in das Messsystem integriert werden, um durch einen Wechsel des Filters das Messsystem an die jeweilige Messsituation anzupassen.

Denkbar ist das Aufbringen von mindestens einem fluoreszierenden Kalibriermarker auf oder neben dem Objekt für eine Kalibrierung des Messsystems mittels der von dem Kalibriermarker durch Fluoreszenz hervorgerufenen Wellenlänge. Ein solcher Kalibriermarker kann eine punktförmige Reflexionsquelle oder eine Reflexionsfläche an einer bekannten oder messbaren Position sein, mit der das Messsystem kalibriert oder das Objekt lokalisiert und/oder orientiert werden kann. Durch die bekannten fluoreszierenden Eigenschaften des Kalibriermarkers kann der Filter so gewählt bzw. angepasst werden, dass er auch die Fluoreszenzwellenlänge des Markers transmittiert. Mit einem fluoreszierenden Kalibriermarker lässt sich erreichen, dass das Messsystem auch ohne einen Durchlassanteil im Projektionswellenlängenbereich und/oder sichtbaren Wellenlängenbereich kalibriert werden kann. Bildstörungen bei der Kalibrierung lassen sich so reduzieren. Die durch Fluoreszenz der Kalibriermarker hervorgerufene Wellenlänge muss nicht zwangsläufig der Fluoreszenzwellenlänge des zu vermessenden Objektes entsprechen. Bei der Bildaufnahme ist dann sicherzustellen, dass die Fluoreszenzwellenlänge des Kalibriermarkers durchgelassen wird.

Das Messsystem zum dreidimensionalen Vermessen von Objekten kann über die Projektionseinheit zur Projektion von Lichtstrukturen auf das zu vermessende Objekt, die optoelektronische Bildaufnahmeeinheit zum Aufnehmen der projizierten Lichtstrukturen und die Auswerteeinheit zur rechnergestützten Auswertung der aufgenommenen Bilder zur Vermessung des Objektes hinaus eine Messzelle mit einer lichtdurchlässigen Scheibe haben, die zur Dämpfung des Umgebungslichtes in dem die Fluoreszenz umfassenden Wellenlängenbereich und/oder dem zur Projektion der Lichtstrukturen genutzten Wellenlängenbereich ausgebildet ist. Der Sensor bestehend aus Projektionseinheit und Bildaufnahmeeinheit ist dabei in der Messzelle angeordnet, in der sich zudem noch ein Messtisch befinden kann, wie z. B. ein Drehteller. Der Sensor kann an einem in der Messzelle angeordneten Roboter angebracht und durch diesen geführt sein.

Die Erfindung wird nachfolgend anhand eines Ausführungsbeispiels mit der beigefügten Zeichnung näher erläutert. Es zeigt:
- Figur 1 -: Optische Messeinrichtung mit Projektor und Stereokamera zur Vermessung von Statorwicklungen einer Elektromaschine;
- Figur 2 -: Optische Messeinrichtung mit Filter zum Durchlass der Fluoreszenz-Wellenlängenbereich und gedämpftem Durchlass des Projektions-Wellenlängenbereichs;
- Figur 3 -: Perspektivische Ansicht eines Messsystems mit Messzelle und darin angeordnetem Roboter mit 3D-Sensor.

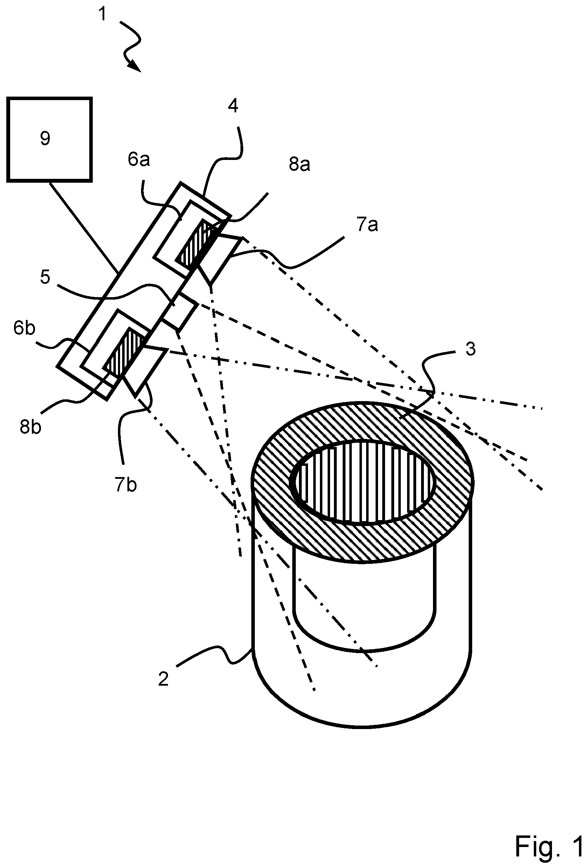

Figur 1 zeigt eine Messeinrichtung 1 zur dreidimensionalen optischen Vermessung eines Objektes 2, die in dem dargestellten Ausführungsbeispiel der Stator einer Elektromaschine ist. Hierbei werden die mit Isolierlack beschichteten Wicklungen 3 optisch vermessen. Bei diesen mit Isolierlack beschichteten Wicklungen 3 handelt es sich um elektromechanische Bauteile im Sinne der vorliegenden Erfindung. Diese Wicklungen 3 können gewundene Kupferleiter oder in Nuten des Stators eingebrachte und mit Isolierlack beschichtete Kupferstäbe sein, welche an der Kopfseite entsprechend des jeweiligen Wicklungsschemas verschweißt sind. Solche elektromechanischen Bauteile können beispielsweise Hairpins mit einer an der Kopfseite, entsprechend des Wicklungsschemas, charakteristischen Faltung sein.

Zur optischen Vermessung eines solchen Objektes 2 ist ein Sensorkopf 4 (3D-Sensor) vorgesehen, welcher mit einem Projektor 5 zur Aufprojektion von Lichtstrukturen auf das Objekt 2 in einem ersten Projektions-Wellenlängenbereich ausgebildet ist. Hierbei kann es sich um beispielsweise ultraviolettes und/oder sichtbares Licht handeln. Zur Vermessung des Objektes 2 bietet sich eine Streifenlichtprojektion an, die an sich bekannt ist. Auch die Projektion einer oder mehrerer Laserlinien und dergleichen ist vorstellbar.

Der Sensorkopf 4 hat weiterhin eine Bildaufnahmeeinheit 6 mit mindestens einer Kamera 6a, 6b, die jeweils einen nicht dargestellten Bildsensor und eine vorgesetzte Optik 7a, 7b haben. Die Kameras 6a, 6b haben weiterhin ein Filterelement 8a, 8b, welches das auf den optoelektronischen Sensor auftreffende Licht derart filtert, dass der zur Projektion von Lichtstrukturen vom Projektor 5 genutzte Wellenlängenbereich teilweise geblockt wird und ein Fluoreszenz-Wellenlängenbereich durchgelassen wird, um die durch Fluoreszenz des Objektes 2 bei der Aufprojektion von Lichtstrukturen bewirkten Lichtintensitäten durchzulassen.

Dabei kann mindestens eines der Filter 8a, 8b so eingestellt sein, dass der zur Projektion genutzte Wellenlängenbereich mit einem Anteil von 0,1 bis 10 % durchgelassen wird. Damit sind gleichzeitig mit einer einzigen Bildaufnahme, d. h. mit einer Bildaufnahmeeinheit 6 (z. B. eine Kamera 6a oder 6b oder eine Stereokamera 6a und 6b) und einem Bild, Messungen von nicht-fluoreszierenden Bereichen des zu vermessenden Objektes sowie von Kalibriermarkern möglich. Mit einem Bild wird dann sowohl der Projektions-Wellenlängenbereich, als auch der Fluoreszenz-Wellenbereich aufgenommen. Durch die Dämpfung des Projektions-Wellenlängenbereichs wird die Lichtmenge auf die Lichtmenge des Fluoreszenz-Wellenlängenbereichs abgestimmt. Durch den Anteil von 0,1 bis 10 % kann bei hell erscheinendem blauem Licht der Projektion erreicht werden, dass der Blauanteil an eine ähnliche Helligkeit angepasst wird, wie der fluoreszierende Anteil der Lichtmenge. Damit können beide Filter 8a, 8b gleichermaßen zum Durchlass des Fluoreszenz-Wellenlängenbereichs und gedämpften Durchlass des Projektions-Wellenlängenbereichs ausgebildet sein. Denkbar ist auch, dass ein Filter 8a zum Durchlass des Fluoreszenz-Wellenlängenbereichs und das andere Filter 8b zum gedämpften Durchlass des Projektions-Wellenlängenbereichs ausgebildet ist und die beiden von den Kameras 6a, 6b mit unterschiedlichen Wellenlängenbereichen aufgenommenen Bilder zu einem Bild zusammengeführt werden.

Denkbar, jedoch nicht beansprucht, ist aber auch, Bildaufnahmen zeitlich nacheinander oder parallel voneinander durchzuführen und die Bildaufnahmen anschließend zu einem Bild zusammenzuführen, wobei bei einer Bildaufnahme der zur Projektion von Lichtstrukturen genutzte Wellenlängenbereich geblockt und der durch Fluoreszenz gewirkte Wellenlängenbereich durchgelassen wird, und bei dem mit einer zweiten Bildaufnahme nur der zur Projektion der Lichtstrukturen genutzte Wellenlängenbereich erfasst wird.

Die von der Kameras 6a, 6b aufweisenden Bildaufnahmeeinheit 6 erfassten Bilder werden einer Auswerteeinheit 9 zugeführt, um die Bilder von einem Rechner gestützt auszuwerten und damit das aufgenommene Objekt 2 dreidimensional zu vermessen.

Die Auswerteeinheit 9 kann ein geeignet programmierter Computer sein. Die dreidimensionale Vermessung ist dabei auf die Auswertung von Bildinformationen der Bilder eingerichtet, die durch die Bildaufnahme in dem Fluoreszenz-Wellenlängenbereich gewonnen wurden. Zusätzlich können auch Bildinformationen in dem zur Projektion genutzten ersten Projektions-Wellenlängenbereich herangezogen werden, die in dem Bild enthalten sind, das Bildinformationen im Fluoreszenz-Wellenlängenbereich umfasst.

Das mindestens eine Filterelement 8a, 8b kann Teil der Aufnahmeoptik 7a, 7b oder Teil des optoelektronischen Sensors, d. h. des Aufnahme-Chips, sein. So kann das Filterelement 8a, 8b beispielsweise auf ein Objektiv geschraubt oder geklemmt werden, um einen Teil der Aufnahmeoptik 7a, 7b zu bilden. Ein Aufschrauben oder Anklemmen würde es auch erlauben in einfacher Weise auf die Messsituation, beispielsweise unterschiedliche Fluoreszenzwellenlängen, angepasste Filter einzusetzen.

Denkbar ist aber auch, dass der mindestens eine Filter 8a, 8b für die durch eine rechner-gestützte Bilddatenbearbeitung dem Aufnahme-Chip nachgelagert ist. Dies setzt allerdings voraus, dass die vom Aufnahme-Chip erfassten Bildinformationen eine Separierung der Wellenlängenbereiche zulassen. Hierzu wird in der Regel erforderlich sein, dass der Aufnahme-Chip spezielle vorgelagerte Filter-Arrays hat, um einzelnen Pixeln den jeweiligen Wellenlängenbereichen zuordnen zu können. Die von dem Aufnahme-Chip so aufgenommenen Pixel-Arrays werden dann üblicherweise durch Demosaiking-Verfahren nachbearbeitet, um die erforderliche Auflösung sicherzustellen.

Der Sensorkopf 4 kann zur Projektion der Lichtstrukturen im blauen Wellenlängenbereich von mehr als 400 nm eingerichtet sein. Dies führt zu einer sichereren Ausleuchtung mit einer hinreichenden Fluoreszenz des Isolierschutzlacks.

Eine Projektion mit ultraviolettem Licht kann zu einer höheren Lichtausbeute durch Fluoreszenz führen. Auch die Projektion von Lichtstrukturen im grünen Wellenlängenbereich von 490 bis 575 nm ist bspw. bei Isolierschutzlack geeignet, um präzise erfassbare Strukturen in einem Bild abzubilden, in dem der Fluoreszenz-Wellenlängenbereich und ein Anteil des Projektions-Wellenlängenbereichs erfasst wird.

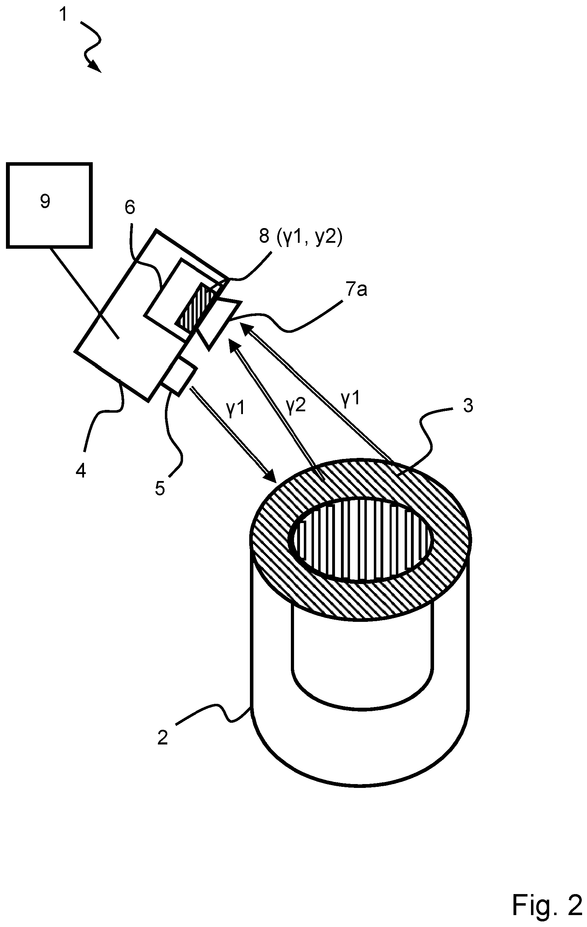

Figur 2 zeigt eine Messeinheit 1 zur dreidimensionalen optischen Vermessung eines Objektes 2, bei der ein von einem Filter 8 ein Wellenlängenbereich y1, in dem die projizierte Lichtstruktur vom Objekt 2 aufgenommen wird, und ein zweiter Fluoreszenz-Wellenlängenbereich y2, in dem die bei der Projektion beleuchtete fluoreszierende Oberfläche fluoresziert, zur Bildaufnahmeeinheit 6 durchgelassen wird. Die Bildaufnahmeeinheit 6 kann wie skizziert bspw. eine Kamera haben oder ggf. auch als Stereokamera mit zwei Kameras 6a, 6b ausgeführt sein, mit denen ein

Bild aufgenommen wird, das Bildinformationen aus den beiden Wellenlängenbereichen enthält. Denkbar ist aber auch die Aufnahme eines Bildes mit mehr als zwei Kameras, deren Abbildungen zu einem Bild zusammengeführt werden. Der Filter 8 kann wie dargestellt als ein Filter ausgebildet sein, er kann sich aber auch aus mehreren Filtern 8a, 8b zusammensetzen. Die Filter 8 können so eingestellt sein, dass der zur Projektion genutzte Wellenlängenbereich y1 mit einem Anteil von 0,1 bis 10 % durchgelassen wird. Durch die Einstellung der Filter 8 kann die Helligkeit des Projektions-Wellenlängenbereichs y1 und des Fluoreszenz-Wellenlängenbereichs y2 so aufeinander abgestimmt werden, dass keiner der beiden Wellenlängenbereiche die Bildhelligkeit überbestimmen. Vorteilhaft ist, wenn die Bildhelligkeiten der durch beide Wellenlängenbereiche hervorgerufenen Effekte annähernd ausgeglichen sind.

Beispielsweise kann der Filter 8a ein absorbierender Filter zur Dämpfung des Projektions-Wellenlängenbereichs und der Filter 8b ein dielektrischer Filter zum Durchlass des Fluoreszenz-Wellenlängenbereichs sein. Durch eine Kombination aus dielektrischem und absorbierendem Filter lassen sich die Durchlasseigenschaften optimieren. Zur Erfassung eines möglichst großen Messlichtanteils ist eine Entspiegelung der Filter 8, 8a, 8b vorteilhaft.

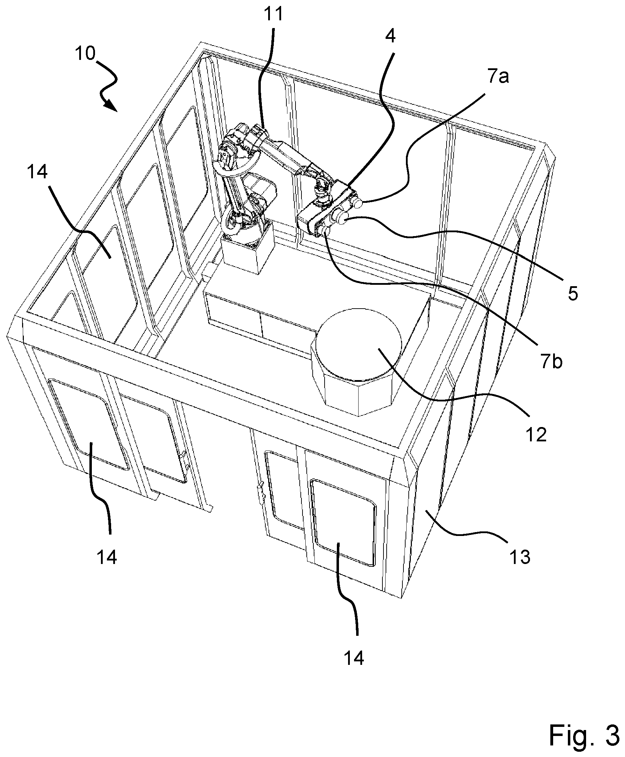

Figur 3 zeigt eine perspektivische Ansicht eines Messsystems mit einer Messzelle 10 und darin angeordnetem Roboter 11, der einen oben beschriebenen 3D-Sensor bzw. Sensorkopf 4 trägt. Weiterhin ist ein Messtisch 12 in der Messzelle 10 angeordnet. Hierbei kann es sich um einen Drehtisch mit einer Plattform handeln, auf die das zu vermessende Objekt 2 platziert wird. Das Objekt 2 kann dann um die vertikale Drehachse, die lotrecht zur Plattformebene steht, gedreht werden. Der Sensorkopf 4 wird durch den Roboter in gewünschte Ausrichtungen zum Objekt 2 gebracht. Mit dem Messtisch 12 kann zudem das Objekt 2 gedreht werden, um auch die zum Roboter 11 rückwärtige Seite vermessen zu können.

Die Messzelle 10 hat Wände 13 mit lichtdurchlässigen Scheiben 14, durch die Umgebungslicht in den Innenraum der Messzelle 10 gelangen kann. Die Scheiben 14 können zur Dämpfung von Laserlicht ausgebildet sein, um so beim Messvorgang mit geschlossenen Türen der Messzelle 10 Personen vor einer Gefährdung durch Laserlichtstrahlung zu schützen. Durch die Scheiben 14 kann der Messvorgang von außen beobachtet und überwacht werden.

Die Messzelle 10 ist in Figur 3 so dargestellt, dass die Decke nach oben geöffnet ist, um den Innenraum erkennen zu können. Sinnvoll ist es, wenn die Messzelle 10 eine geschlossene Decke hat, um einen störenden Einfluss von Umgebungslicht auf die optische Vermessung zu reduzieren.

Das Umgebungslicht kann bei der Messung zu Problemen führen, da das Filter 8a, 8b für die Bildaufnahmeeinheit 6 das Messlicht stark reduziert. Das durch Fluoreszenz hervorgerufene Licht leuchtet weniger hell, als das zur Projektion genutzte Messlicht. Daher ist es vorteilhaft, wenn die Umgebung beim Messen möglichst dunkel ist. Dies kann durch Verzicht auf die Scheiben 14 (Fenster), d. h. durch geschlossene Wände 13 sichergestellt werden. Dies hat aber den Nachteil, dass ein Beobachten des Roboters 11 und des Sensorkopfes 4 z. B. zum Einlernen ("Teachen") und während des Betriebs von außen nicht mehr so einfach möglich ist.

Die Scheiben 14 können daher z. B. durch geeignete Materialwahl oder durch zusätzlich aufgebrachte Filterfolien zur Dämpfung des Umgebungslichtes ausgebildet sein. Dabei kann die Dämpfung an das Filter 8a, 8b angepasst sein, um eine Bildaufnahme in dem die Fluoreszenz umfassenden Wellenlängenbereich mit möglichst großer Lichtausbeute und reduziertem Einfluss durch Umgebungslicht in diesem Wellenlängenbereich zu erreichen.

## Patentansprüche

1. Verfahren zum dreidimensionalen Vermessen von Objekten (2) mit einem triangulierenden Messverfahren durch Projektion von Lichtstrukturen auf das zu vermessende Objekt (2), Aufnehmen der projizierten Lichtstrukturen mittels optoelektronischer Bildaufnahme und rechnergestützter Auswertung der aufgenommenen Bilder zur Vermessung des Objektes (2), wobei die Lichtstrukturen in einem ersten Wellenlängenbereich aufprojiziert werden und die Bildaufnahme den Wellenlängenbereich erfasst, der die durch Fluoreszenz des Objektes (2) bewirkten Intensitäten umfasst, und eine Filterung der vom Objekt (2) ausgehenden Wellenlängen beim Aufnehmen der projizierten Lichtstrukturen erfolgt, wobei für dieselbe Bildaufnahme sowohl der zur Projektion von Lichtstrukturen genutzte Wellenlängenbereich, als auch der die Fluoreszenz umfassende Wellenlängenbereich erfasst wird, **gekennzeichnet durch** Abstimmung der bei der Filterung durch Dämpfung des Projektions-Wellenlängenbereichs durchgelassenen Lichtmenge des Projektions-Wellenlängenbereichs auf die Lichtmenge der Fluoreszenz-Wellenlänge zum Ausgleich der Bildhelligkeiten der durch beide Wellenlängenbereiche hervorgerufenen Effekte, wobei die Transmission des die Fluoreszenz umfassenden Wellenlängenbereichs größer als die Transmission des zur Projektion von Lichtstrukturen genutzten Wellenlängenbereichs ist.

2. Verfahren nach Anspruch 1, **dadurch gekennzeichnet, dass** als Objekte (2) Bauteile, insbesondere elektronische oder elektromechanische Bauteile und Bauteile aus Kunststoffmaterial, vermessen werden, die eine selbstfluoreszierende Oberfläche haben.

3. Verfahren nach Anspruch 2, **dadurch gekennzeichnet, dass** die von den selbstfluoreszierenden Bauteilen aufgenommenen Bilder durch Filterung mittels höherer Transmission des die Fluoreszenz umfassenden Wellenlängenbereichs und geringerer Transmission des zur Projektion von Lichtstrukturen genutzten Wellenlängenbereichs erfasst werden.

4. Verfahren nach einem der Ansprüche 2 oder 3, **dadurch gekennzeichnet, dass** die elektronischen oder elektromechanischen Bauteile beschichtet sind, insbesondere mit Isolierlack, und die Beschichtung, insbesondere der Isolierlack, als selbstfluoreszierende Oberfläche verwendet wird.

5. Verfahren nach einem der vorhergehenden Ansprüche, **gekennzeichnet durch** Vermessung von Elektromaschinen, insbesondere von Rotor- und/oder Statorwicklungen (3) von Elektromaschinen.

6. Verfahren nach einem der vorhergehenden Ansprüche, **dadurch gekennzeichnet, dass** der zu Projektion genutzte Wellenlängenbereich noch mit einem Anteil von 0,1 bis 10 % durchgelassen wird.

7. Verfahren nach einem der vorhergehenden Ansprüche, **dadurch gekennzeichnet, dass** die Fluoreszenz-Wellenlänge ab 500 nm durchgelassen wird.

8. Verfahren nach einem der vorhergehenden Ansprüche, **dadurch gekennzeichnet, dass** die Projektion in einem sichtbaren Wellenlängenbereich von oberhalb 400 nm erfolgt.

9. Verfahren nach Anspruch 8, **dadurch gekennzeichnet, dass** die Projektion mit blauem Licht im Wellenlängenbereich von 420 bis 490 nm und/oder mit grünem Licht in Wellenlängenbereich von 490 bis 575 nm erfolgt.

10. Verfahren nach einem der Ansprüche 1 bis 7, **dadurch gekennzeichnet, dass** die Projektion in ultraviolettem Wellenlängenbereich von 100 bis 400 nm erfolgt.

11. Verfahren nach einem der vorhergehenden Ansprüche, **gekennzeichnet durch** Filterung mit einem dielektrischen Filter, einem absorbierenden Filter oder einer Kombination aus dielektrischem und absorbierendem Filter.

12. Verfahren nach einem der vorhergehenden Ansprüche, **gekennzeichnet durch** Filterung mit einem entspiegelten Filter.

13. Verfahren nach einem der vorhergehenden Ansprüche, **gekennzeichnet durch** Bandpassfilterung oder Langpassfilterung.

14. Verfahren nach einem der vorhergehenden Ansprüche, **gekennzeichnet durch** Aufbringen von mindestens einem fluoreszierenden Kalibriermarker auf das Objekt (2) und Kalibrierung des Messsystems, Lokalisierung des Objektes und/oder relative Orientierung von Messsystem und Objekt zueinander mit Hilfe der Kalibriermarker.

15. Messsystem zum dreidimensionalen Vermessen von Objekten (2) mit einem triangulierenden Messverfahren nach einem der vorhergehenden Ansprüche, wobei das Messsystem eine Projektionseinheit (5) zur Projektion von Lichtstrukturen auf das zu vermessende Objekt (2), eine optoelektronische Bildaufnahmeeinheit (6) zum Aufnehmen der projizierten Lichtstrukturen und eine Auswerteeinheit zur rechnergestützten Auswertung der aufgenommenen Bilder zur Vermessung des Objektes (2) hat, wobei das Messsystem eingerichtet ist, um die Lichtstrukturen in einem ersten Wellenlängenbereich aufzuprojizieren und den Wellenlängenbereich bei der Bildaufnahme zu erfassen, der die durch Fluoreszenz bewirkten Intensitäten des Objektes (2) umfasst, **gekennzeichnet durch** ein Filter (8, 8a, 8b) zur Filterung der vom Objekt (2) ausgehenden Wellenlängen beim Aufnehmen der projizierten Lichtstrukturen derart, dass für dieselbe Bildaufnahme sowohl der zur Projektion von Lichtstrukturen genutzte Wellenlängenbereich, als auch der die Fluoreszenz umfassende Wellenlängenbereich erfasst wird und eine Abstimmung der bei der Filterung durch Dämpfung des Projektions-Wellenlängenbereichs durchgelassenen Lichtmenge des Projektions-Wellenlängenbereichs auf die Lichtmenge der Fluoreszenz-Wellenlänge zum Ausgleich der Bildhelligkeiten der durch beide Wellenlängenbereiche hervorgerufenen Effekte erfolgt, wobei die Transmission des die Fluoreszenz umfassenden Wellenlängenbereichs größer als die Transmission des zur Projektion von Lichtstrukturen genutzten Wellenlängenbereichs ist.

16. Messsystem nach Anspruch 15, **dadurch gekennzeichnet, dass** der Filter (8, 8a, 8b) dielektrisch und/oder absorbierend und/oder entspiegelt ist.

17. Messsystem nach Anspruch 15 oder 16, **dadurch gekennzeichnet, dass** der Filter (8, 8a, 8b) austauschbar in das Messsystem integriert ist.

18. Messsystem nach einem der Ansprüche 15 bis 17, **dadurch gekennzeichnet, dass** das Messsystem eine Messzelle (10) mit einer lichtdurchlässigen Scheibe (14) hat, die zur Dämpfung des Umgebungslichtes in dem die Fluoreszenz umfassenden Wellenlängenbereich und/oder dem zur Projektion der Lichtstrukturen genutzten Wellenlängenbereich ausgebildet ist.

## Claims

1. Method for three-dimensional measuring of objects (2) using a triangulating measuring method by projecting light structures onto the object (2) to be measured, recording the projected light structures by means of an optoelectronic image recording and performing a computer-assisted evaluation of the recorded images for the purpose of measuring the object (2), with the light structures being projected in a first wavelength range and the image recording capturing the wavelength range comprising the intensities caused by fluorescence of the object (2), and filtering of the wavelengths emanating from the object (2) being implemented when recording the projected light structures, with both the wavelength range used for projecting light structures and the wavelength range comprising the fluorescence being captured for the same image recording, **characterized by** matching the amount of light of the projection wavelength range passed by damping the projection wavelength range during the filtering to the amount of light at the fluorescence wavelength for the purpose of equalizing the image brightnesses of the effects caused by the two wavelength ranges, the transmission of the wavelength range comprising the fluorescence being greater than the transmission of the wavelength range used for projecting light structures.

2. Method according to Claim 1, **characterized in that** components, in particular electronic or electromechanical components and components made of plastics material, with an autofluorescent surface are measured as objects (2).

3. Method according to Claim 2, **characterized in that** the recorded images of the autofluorescent components are captured by filtering by means of a higher transmission of the wavelength range comprising the fluorescence and a lower transmission of the wavelength range used to project light structures.

4. Method according to either of Claims 2 and 3, **characterized in that** the electronic or electromechanical components are coated, in particular with an insulation lacquer, and the coating, in particular the insulation lacquer, is used as autofluorescent surface.

5. Method according to any of the preceding claims, **characterized by** measuring electrical machines, especially rotor and/or stator windings (3) of electrical machines.

6. Method according to any of the preceding claims, **characterized in that** a component of 0.1 to 10% of the wavelength range used for projection purposes is still passed.

7. Method according to any of the preceding claims, **characterized in that** the fluorescence wavelength above 500 nm is passed.

8. Method according to any of the preceding claims, **characterized in that** the projection is implemented in a visible wavelength range above 400 nm.

9. Method according to Claim 8, **characterized in that** the projection is implemented with blue light in the wavelength range of 420 to 490 nm and/or with green light in the wavelength range of 490 to 575 nm.

10. Method according to any of Claims 1 to 7, **characterized in that** the projection is implemented in the ultraviolet wavelength range of 100 to 400 nm.

11. Method according to any of the preceding claims, **characterized by** filtering with a dielectric filter, an absorbing filter or a combination of dielectric and absorbing filter.

12. Method according to any of the preceding claims, **characterized by** filtering with an antireflection coated filter.

13. Method according to any of the preceding claims, **characterized by** bandpass filtering or long-pass filtering.

14. Method according to any of the preceding claims, **characterized by** applying at least one fluorescing calibration marker to the object (2) and calibrating the measuring system, locating the object and/or orienting measuring system and object relative to one another with the aid of the calibration markers.

15. Measuring system for three-dimensional measuring of objects (2) using a triangulating measuring method according to any of the preceding claims, the measuring system having a projection unit (5) for projecting light structures onto the object (2) to be measured, an optoelectronic image recording unit (6) for recording the projected light structures and an evaluation unit for performing a computer-assisted evaluation of the recorded images for the purpose of measuring the object (2), with the measuring system being configured to project the light structures in a first wavelength range and to capture the wavelength range comprising the intensities caused by fluorescence of the object (2) during the image recording, **characterized by** a filter (8, 8a, 8b) for filtering the wavelengths emanating from the object (2) when recording the projected light structures, in such a way that both the wavelength range used for projecting light structures and the wavelength range comprising the fluorescence are captured for the same image recording and the amount of light of the projection wavelength range passed by damping the projection wavelength range during the filtering is matched to the amount of light at the fluorescence wavelength for the purpose of equalizing the image brightnesses of the effects caused by the two wavelength ranges, wherein the transmission of the wavelength range comprising the fluorescence is greater than the transmission of the wavelength range used for projecting light structures.

16. Measuring system according to Claim 15, **characterized in that** the filter (8, 8a, 8b) is dielectric and/or absorbing and/or antireflection coated.

17. Measuring system according to Claim 15 or 16, **characterized in that** the filter (8, 8a, 8b) is integrated in the measuring system in exchangeable fashion.

18. Measuring system according to any of Claims 15 to 17, **characterized in that** the measuring system has a measuring cell (10) with a light-transmissive pane (14) designed to damp the ambient light in the wavelength range comprising the fluorescence and/or the wavelength range used for projecting the light structures.

## Revendications

1. Procédé de mesure tridimensionnelle d'objets (2) à l'aide d'un procédé de mesure par triangulation, par projection de structures lumineuses sur l'objet (2) à mesurer, par capture des structures lumineuses projetées au moyen d'une capture d'image optoélectronique et par évaluation assistée par ordinateur des images capturées pour mesurer l'objet (2), les structures lumineuses étant projetées dans une première plage de longueurs d'onde et la capture d'image détectant la plage de longueurs d'onde qui présente les intensités provoquées par la fluorescence de l'objet (2), et un filtrage des longueurs d'onde émises par l'objet (2) étant effectué lors de la capture des structures lumineuses projetées, dans lequel, pour la même capture d'image, tant la plage de longueurs d'onde utilisée pour la projection de structures lumineuses que la plage de longueurs d'onde présentant la fluorescence sont détectées, **caractérisé par** l'adaptation de la quantité de lumière de la plage de longueurs d'onde de projection transmise lors du filtrage par atténuation de la plage de longueurs d'onde de projection à la quantité de lumière de la longueur d'onde de fluorescence afin de compenser les luminosités d'image des effets provoqués par les deux plages de longueurs d'onde, la transmission de la plage de longueurs d'onde présentant la fluorescence étant supérieure à la transmission de la plage de longueurs d'onde utilisée pour la projection de structures lumineuses.

2. Procédé selon la revendication 1, **caractérisé en ce que** des composants, en particulier des composants électroniques ou électromécaniques et des composants en matière plastique, sont mesurés en tant qu'objets (2), lesquels composants présentent une surface autofluorescente.

3. Procédé selon la revendication 2, **caractérisé en ce que** les images capturées par les composants autofluorescents sont détectées par filtrage au moyen d'une transmission plus élevée de la plage de longueurs d'onde présentant la fluorescence et d'une transmission plus faible de la plage de longueurs d'onde utilisée pour la projection de structures lumineuses.

4. Procédé selon l'une des revendications 2 ou 3, **caractérisé en ce que** les composants électroniques ou électromécaniques sont revêtus, en particulier d'un vernis isolant, et le revêtement, en particulier le vernis isolant, est utilisé comme surface autofluorescente.

5. Procédé selon l'une quelconque des revendications précédentes, **caractérisé par** la mesure de machines électriques, en particulier d'enroulements de rotor et/ou de stator (3) de machines électriques.

6. Procédé selon l'une quelconque des revendications précédentes, **caractérisé en ce que** la plage de longueurs d'onde utilisée pour la projection est encore transmise dans une proportion de 0,1 % à 10 %.

7. Procédé selon l'une quelconque des revendications précédentes, **caractérisé en ce que** la longueur d'onde de fluorescence est transmise à partir de 500 nm.

8. Procédé selon l'une quelconque des revendications précédentes, **caractérisé en ce que** la projection s'effectue dans une plage de longueurs d'onde visible au-dessus de 400 nm.

9. Procédé selon la revendication 8, **caractérisé en ce que** la projection s'effectue avec de la lumière bleue dans la plage de longueurs d'onde de 420 à 490 nm et/ou avec de la lumière verte dans la plage de longueurs d'onde de 490 à 575 nm.

10. Procédé selon l'une quelconque des revendications 1 à 7, **caractérisé en ce que** la projection s'effectue dans une plage de longueurs d'onde ultraviolettes de 100 à 400 nm.

11. Procédé selon l'une quelconque des revendications précédentes, **caractérisé par** un filtrage avec un filtre diélectrique, un filtre absorbant ou une combinaison de filtre diélectrique et de filtre absorbant.

12. Procédé selon l'une quelconque des revendications précédentes, **caractérisé par** un filtrage avec un filtre antireflet.

13. Procédé selon l'une quelconque des revendications précédentes, **caractérisé par** un filtrage passe-bande ou un filtrage passe-long.

14. Procédé selon l'une quelconque des revendications précédentes, **caractérisé par** l'application d'au moins un marqueur d'étalonnage fluorescent sur l'objet (2) et l'étalonnage du système de mesure, la localisation de l'objet et/ou l'orientation relative du système de mesure et de l'objet l'un par rapport à l'autre à l'aide des marqueurs d'étalonnage.

15. Système de mesure pour la mesure tridimensionnelle d'objets (2) à l'aide d'un procédé de mesure par triangulation selon l'une quelconque des revendications précédentes, le système de mesure comprenant une unité de projection (5) pour projeter des structures lumineuses sur l'objet (2) à mesurer, une unité de capture d'image optoélectronique (6) pour la capture des structures lumineuses projetées et une unité d'évaluation pour l'évaluation assistée par ordinateur des images capturées pour la mesure de l'objet (2), le système de mesure étant conçu pour projeter les structures lumineuses dans une première plage de longueurs d'onde et pour détecter, lors de la capture d'image, la plage de longueurs d'onde qui présente les intensités de l'objet (2) provoquées par la fluorescence, **caractérisé par** un filtre (8, 8a, 8b) pour filtrer les longueurs d'onde émises par l'objet (2) lors de la capture des structures lumineuses projetées de telle sorte que, pour la même capture d'image, tant la plage de longueurs d'onde utilisée pour la projection de structures lumineuses que la plage de longueurs d'onde présentant la fluorescence sont détectées, et une adaptation de la quantité de lumière de la plage de longueurs d'onde de projection transmise lors du filtrage par atténuation de la plage de longueurs d'onde de projection à la quantité de lumière de la longueur d'onde de fluorescence étant effectuée afin de compenser les luminosités d'image des effets provoqués par les deux plages de longueurs d'onde, la transmission de la plage de longueurs d'onde présentant la fluorescence étant supérieure à la transmission de la plage de longueurs d'onde utilisée pour la projection de structures lumineuses.

16. Système de mesure selon la revendication 15, **caractérisé en ce que** le filtre (8, 8a, 8b) est diélectrique et/ou absorbant et/ou anti-reflet.

17. Système de mesure selon la revendication 15 ou 16, **caractérisé en ce que** le filtre (8, 8a, 8b) est intégré de manière interchangeable dans le système de mesure.

18. Système de mesure selon l'une quelconque des revendications 15 à 17, **caractérisé en ce que** le système de mesure comporte une cellule de mesure (10) dotée d'une vitre (14) laissant passer la lumière, qui est conçue pour atténuer la lumière ambiante dans la plage de longueurs d'onde présentant la fluorescence et/ou la plage de longueurs d'onde utilisée pour la projection des structures lumineuses.
